Europäisches Patentamt

European Patent Office

Office européen des brevets

(11) Veröffentlichungsnummer: **0 016 850**
**B1**

## EUROPÄISCHE PATENTSCHRIFT

(45) Veröffentlichungstag der Patentschrift:
**13.04.83**

(21) Anmeldenummer: **79100973.1**

(22) Anmeldetag: **30.03.79**

(51) Int. Cl.³: **H 02 H 9/06, H 01 T 5/00**

(54) **Überspannungsableiter für mehrere gemeinsam abzusichernde Leitungen.**

(30) Priorität: **21.03.79 DE 2911109**

(43) Veröffentlichungstag der Anmeldung:
**15.10.80 Patentblatt 80/21**

(45) Bekanntmachung des Hinweises auf die Patenterteilung:
**13.04.83 Patentblatt 83/15**

(84) Benannte Vertragsstaaten:
**BE CH FR GB IT SE**

(56) Entgegenhaltungen:
**DE-A-1 462 168**
**DE-A-1 515 713**
**DE-A-2 101 417**
**FR-A-1 175 318**

(73) Patentinhaber: **SIEMENS AKTIENGESELLSCHAFT,
Berlin und München Wittelsbacherplatz 2,
D-8000 München 2 (DE)**

(72) Erfinder: **Schilling, Günter, Kladowerdamm 344 G,
D-1000 Berlin 22 (DE)**
Erfinder: **Boy, Jürgen, Müllerstrasse 131,
D-1000 Berlin 65 (DE)**
Erfinder: **Lange, Gerhard, Balùschekweg 10,
D-1000 Berlin 20 (DE)**
Erfinder: **Heinze, Klaus-Dietrich, Gardeschützenweg 44,
D-1000 Berlin 45 (DE)**

## Überspannungsableiter für mehrere gemeinsam abzusichernde Leitungen

Die Erfindung betrifft einen Überspannungsableiter für mehrere gemeinsam abzusichernde elektrische Leitungen gemäß Oberbegriff des Patentanspruchs 1.

Ein derartiger Überspannungsableiter ist aus der DE-OS 1 462 168 bekannt. Dem Stand der Technik ist jedoch kein einfacher, funktionssicherer und für die praktischen Anforderungen ausreichend robuster Aufbau der Schaltung zu entnehmen.

Überspannungsableiter finden breite Anwendung beispielsweise in Telefon- und Fernschreibanlagen, in deren Verbindungsleitungen Überspannungen auftreten können. Zum Schutz von Menschen und Anlagen begrenzen Überspannungsableiter solche Überspannungen auf ungefährliche Werte, das heißt »leiten sie ab«. Beispielsweise gilt dies für einen Verstärker mit zwei ankommenden und zwei abgehenden Leitungen. Beim Auftreten einer Überspannung in einer der Leitungen ist es wünschenswert, nach dem Ansprechen des Überspannungsableiters für diese Leitung mit geringstmöglicher Verzögerung auch die Überspannungsableiter für die drei anderen Leitungen ansprechen zu lassen. Außerdem müssen Querspannungen zwischen den einzelnen Leitungen unter einem vorgegebenen Grenzwert bleiben.

In einem Vierstrecken-Überspannungsableiter, der auf dem Markt angeboten wird, sind in einem gemeinsamen Gasraum vier Stiftelektroden um eine Mittelelektrode herum angeordnet. Das Anordnen mehrerer Gasentladungsstrecken in einem gemeinsamen Gasraum ist mit dem prinzipiellen Risiko behaftet, daß bei Überlastung einer einzelnen Gasladungsstrecke und einem dadurch eventuell verursachten Undichtwerden des Gasraums alle Gasentladungsstrecken in der Funktion gestört werden. Weiter erlaubt die Elektrodenanordnung nach dem bekannten Vierstrecken-Überspannungsableiter nur eine geringe Elektrodenfläche. Dadurch sind die Ansprechgleichspannungen bei der Herstellung des Ableiters und im Betrieb schlecht auf konstanten Werten zu halten. Auch ist die Möglichkeit, auf den Elektroden Aktivierungsmassen anzubringen, gering. Darüber hinaus ist das Anbringen einer Zündhilfe in Form einer feldverzerrenden Elektrode im Bereich der Gasentladungsstrecken schwer, wenn nicht aus geometrischen Gründen unmöglich. Nicht zuletzt bedeutet bei dem bekannten Ableiter die Art der Durchführung der Stiftelektrodenanschlüsse ein mechanisches Risiko und damit ein Risiko für die Dichtheit des Gasraums.

Der vorliegenden Erfindung liegt die Aufgabe zugrunde, einen Überspannungsableiter zu schaffen, der das gemeinsame Absichern mehrerer, das heißt zwei oder mehr angeschlossener Leitungen garantiert, dabei aber die Nachteile eines gemeinsamen Gasraums nicht aufweist. Insbesondere sollen die bei Einzelableitern technologisch erreichbaren Werte hinsichtlich Ansprechspannungen, Schnelligkeit, Belastbarkeit und Konstanz möglichst ebenfalls erreicht werden.

Zur Lösung dieser Aufgabe werden bei einem Überspannungsableiter für mehrere gemeinsam abzusichernde Leitungen gemäß dem Oberbegriff des Anspruchs 1 die kennzeichnenden Merkmale des Anspruchs 1 vorgeschlagen.

Um eine niedrige Ansprechstoßspannung der in Reihe geschalteten Ableiter zu erhalten, ist es vorteilhaft, eine auftretende steil ansteigende Überspannung ungleich zu verteilen. Beim erfindungsgemäßen Überspannungsableiter ist deshalb die Kapazität des gemeinsamen Ableiters verschieden von der Kapazität der einzelnen Einzelableiter.

Dabei ist es am besten, wenn die Kapazität des gemeinsamen Ableiters größer ist als die Kapazität der einzelnen Einzelableiter. Die erfindungsgemäße Ausgestaltung des Verbindungskörpers ersetzt eine technologisch noch mögliche Vergrößerung der inneren Eigenkapazität, und ein Parallelschalten eines Kondensators zum gemeinsamen Ableiter. Der Verbindungskörper hat vorteilhaft die Form eines Bechers, dessen Wandfläche mit der gegenüberstehenden Wandfläche des metallischen Bechers den Kondensator bildet. Der metallische Becher liegt auf dem Bezugspotential.

Bei steil ansteigenden Überspannungen teilt sich die Spannung vor dem Ansprechen des Überspannungsableiters in umgekehrtem Verhältnis der in Reihe liegenden Kapazitäten auf. Eine große Kapazität des gemeinsamen Ableiters bedeutet dann einen hochfrequenten Kurzschluß, so daß zuerst der entsprechende Einzelableiter anspricht. Danach liegt nahezu die gesamte Spannung am gemeinsamen Ableiter, der dadurch ebenfalls schnell anspricht.

Die Ansprechspannungen des gemeinsamen Ableiters und jeweils eines Einzelableiters setzen sich zu den wirksamen Ansprechspannungen zusammen. Tritt an einer der angeschlossenen Leitungen eine Überspannung auf, die die Ansprechstoßspannung des gesamten Überspannungsableiters übersteigt, dann sprechen der angeschlossene Einzelableiter und der gemeinsame Ableiter praktisch gleichzeitig an und begrenzen die Überspannung bzw. schließen die Leitung zum Bezugspotential bis auf die Summe zweier Bogenbrennspannungen nahezu kurz, falls die Einzelableiter und der gemeinsame Ableiter Gasentladungsableiter sind. Nach diesem Ansprechen liegen an den anderen Einzelableitern die Betriebsspannungen der angeschlossenen Leitungen, vermindert um die am gemeinsamen Ableiter begrenzte Spannung, im Falle des gemeinsamen Gasentladungsableiters um dessen Bogenbrennspannung. Da durch das Ansprechen des gemeinsamen Ableiters die gesamte Ansprechspannung für die anderen Leitungen erheblich erniedrigt ist, sprechen die anderen Einzelableiter anschließend auch bei geringen Überspannungen an, die eventuell durch induktive Kopplung oder aus anderen Gründen auf den anderen Leitungen liegen. Auf diese Weise werden ein gemeinsames Absichern der beteiligten Leitungen bewerkstelligt und ein zuverlässiger Schutz für die angeschlossenen Anlagen garantiert.

Vorteilhaft ist, wenn die Ansprechgleichspannungen der Einzelableiter jeweils kleiner sind als die Betriebsspannung der angeschlossenen Leitung. Dadurch wird das nahezu gleichzeitige Ansprechen aller Einzelableiter und damit ein Verhalten erreicht, wie es ein Mehrstreckenableiter mit gemeinsamem Gasraum zeigt. Wesentlich ist dabei jedoch, daß bei dem erfindungsgemäßen Einsatz von Einzelableitern sämtliche Vorteile von Einzelableitern genutzt werden können hinsichtlich der Elektrodenflächen und -formen und den damit verbundenen fertigungstechnisch beherrschbaren Toleranzen, die sich auf niedrige und konstante Ansprechspannungen auswirken, einschließlich der Vorteile von Aktivierungsmassen und Zündhilfen. Die Reihenschaltung zweier Gasentladungsableiter hat außerdem den Vorteil, daß die Löschspannung hohe Werte annehmen kann, die beim Einsatz eines einzelnen Gasentladungsableiters mit Aktivierungsmasse nicht erreicht werden können.

Falls die Ansprechgleichspannungen der Einzelableiter weit niedriger als die Betriebsspannungen gemacht werden sollen bzw. wenn die Betriebsspannungen so niedrige Werte haben, daß die Einzelableiter eine Ansprechgleichspannung von weniger als ca. 70 V haben müssen, damit alle an den Leitungen angeschlossenen Einzelableiter gemeinsam ansprechen, ist es vorteilhaft, für die Einzelableiter Festkörperableiter, insbesondere Varistoren, zu verwenden. Eine Ansprechgleichspannung kleiner als ca. 70 V ist für Gasentladungsableiter aus technologischen Gründen schwer zu erreichen. Bei Festkörperableitern ist dies dagegen leicht möglich.

Eine weitere Ausgestaltung eines erfindungsgemäßen Überspannungsableiters betrifft das Aufrechterhalten des Personen- und Geräteschutzes durch ein sogenanntes Fail-Safe-Verhalten. Bei Überlastung soll ein bleibender Kurzschluß erfolgen. Zu diesem Zweck ist vorgesehen, daß die Einzelableiter bei Überlastung einen inneren Kurzschluß durch Verschmelzen der Elektrodenscheiben bekommen und der gemeinsame Ableiter auf seiner Außenseite einen vorgespannten, über eine Schmelzpille von der Außenseite abgespreizten Kurzschlußbügel trägt, der bei Überlastung die Elektroden kurzschließt.

Ein solches kombiniertes Fail-Safe-Verhalten ist durch das erfindungsgemäße Aufteilen in Einzelableiter möglich. Die Einzelableiter schließen jeweils schnell und individuell kurz. Der Summenstrom durch den gemeinsamen Ableiter ergänzt dies durch den äußeren Kurzschluß über den Kurzschlußbügel.

Anhand der Figuren der Zeichnung soll die Erfindung weiter erläutert werden. Dabei zeigt

Fig. 1 ein schematisches Ersatzschaltbild für das Beispiel eines Vier-Ader-Schutzes eines Verstärkers,

Fig. 2 den Aufbau eines erfindungsgemäßen Überspannungsableiters für vier Adern und

Fig. 3 eine konstruktive Weiterbildung des Aufbaues von Fig. 2 hinsichtlich der Kapazität des gemeinsamen Ableiters.

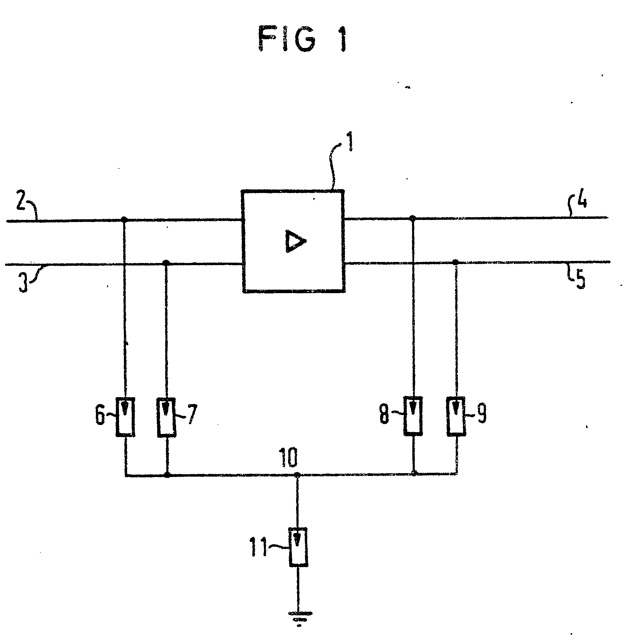

In der Fig. 1 ist mit 1 ein Verstärkervierpol bezeichnet. Zwei Leitungen 2 und 3 führen zum Eingang, zwei Leitungen 4 und 5 führen vom Ausgang weiter. Von den vier Leitungen 2 bis 5 führen jeweils einer von vier Einzelableitern 6 bis 9 zu einem gemeinsamen Elektrodenanschluß 10. Zwischen diesem und einem Bezugspotential liegt ein gemeinsamer Ableiter 11.

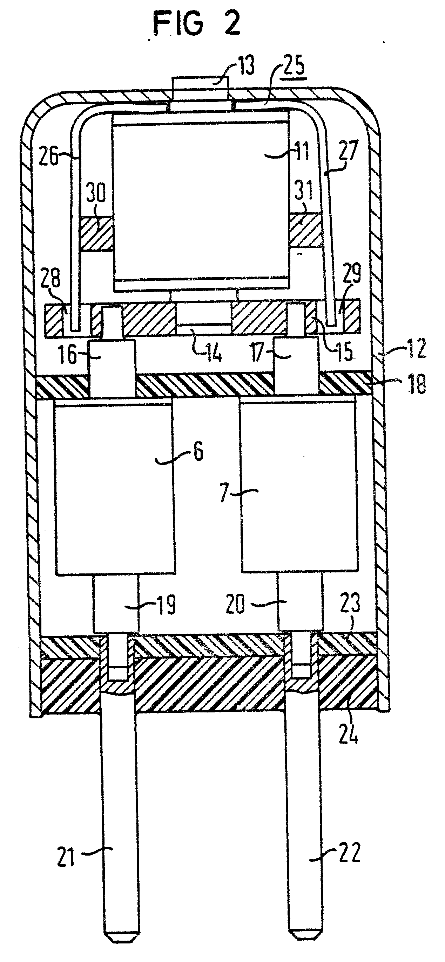

In Fig. 2 ist eine konstruktive Ausgestaltung des Ausführungsbeispiels nach Fig. 1 für einen Überspannungsableiter für vier Adern dargestellt, wobei allerdings aus darstellungstechnischen Gründen nur zwei der Einzelableiter gezeichnet sind. Ein metallischer Becher 12 dient als Träger und Hülle für den erfindungsgemäßen Überspannungsableiter. Oben hat der Becher 12 eine Öffnung, durch die ein erster Elektrodenanschluß 13 des gemeinsamen Ableiters 11 als äußerer Anschluß für das Bezugspotential herausragt. Ein zweiter Elektrodenanschluß 14 des gemeinsamen Ableiters 11 steckt zentral in einer Metallplatte 15, die den gemeinsamen elektrischen Anschluß 10 für die vier Einzelableiter 6 bis 9 darstellt. Gezeichnet sind nur zwei der Einzelableiter 6 bis 9, nämlich 6 und 7, deren eine Elektrodenanschlüsse 16 und 17 in der Metallplatte 15 stecken. Definiert gehalten im Becher 12 werden die Einzelableiter 6 bis 9 durch eine Isolatorplatte 18, durch die die Elektrodenanschlüsse 16, 17 und die entsprechenden der nicht gezeichneten anderen Einzelableiter 8, 9 hindurchgesteckt sind. Die jeweils anderen Elektrodenanschlüsse 19, 20 der Einzelableiter 6, 7 (und entsprechend die der Einzelableiter 8, 9) sind mit Anschlußstiften 21, 22 verbunden, die durch eine Isolator-Endplatte 23 mit Vergußmasse 24 aus dem Becher 12 herausführen.

Der gemeinsame Ableiter 11 und die Einzelableiter 6 bis 9 sind Gasentladungs-Überspannungsableiter mit jeweils einer Entladungsstrecke. Der gemeinsame Ableiter 11 hat beispielsweise eine Ansprechgleichspannung von 150 V, die Einzelableiter jeweils 90 V.

Zwischen dem Becherboden und der durchführenden Elektrode 13 des gemeinsamen Ableiters 11 ist ein Kurzschlußbügel 25 eingespannt, der sich über zwei Arme 26 und 27 an zwei sich gegenüberstehenden Längsseiten des gemeinsamen Ableiters 11 entlang bis in zwei Öffnungen 28, 29 der Metallplatte 15 erstreckt und federnd gegen die Isolatorwand des gemeinsamen Ableiters 11 vorgespannt und durch jeweils eine Schmelzpille 30 bzw. 31 in dieser Lage gehalten ist. Im Falle eines Ansprechens mindestens eines der Einzelableiter 6 bis 9 und des gemeinsamen Ableiters 11 erwärmt bei Überlast der Summenstrom durch den gemeinsamen Ableiter 11 die Isolatorwand und die Schmelzpillen 30 und 31. Beim Überschreiten einer Obergrenze schmelzen die Schmelzpillen 30 und 31 und lassen die Arme 26 und 27 des Kurzschlußbügels 25 gegen die Isolatorwand federn. Dadurch liegen die Armenden an den Innenwänden der Öffnungen 28, 29 in der Metallplatte 15 an und schließen damit die beiden Elektrodenanschlüsse 13 und 14 des gemeinsamen Ableiters 11 kurz.

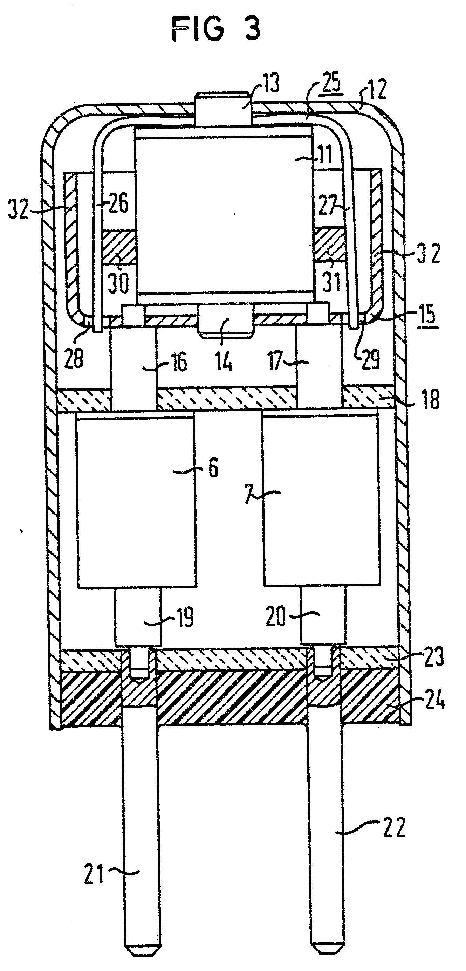

Die Fig. 3 ist nahezu identisch mit der Fig. 2. Enthalten sind wieder die Positionen 6 bis 31. Die Metallplatte 15 für den gemeinsamen Elektrodenanschluß 11 ist jedoch becherartig hochgezogen und bildet mit ihrer Wand 32 und dem dazu parallelliegenden Teil des äußeren Metallbechers 12 einen Kondensator, der elektrisch parallel zu der Entladungsstrecke des gemeinsamen Ableiters 11 liegt. Dadurch läßt sich auf konstruktive Weise die wirksame Spannungsteilerkapazität des gemeinsamen Ableiters 11 so erhöhen, daß ein schnelles Erstzünden eines der Einzelableiter 6 bis 9 gewährleistet ist.

**Patentansprüche**

1. Überspannungsableiter für mehrere gemeinsam abzusichernde elektrische Leitungen mit den Merkmalen:

a) je ein Einzelableiter (6 bis 9) ist an einem von seinen zwei Elektrodenanschlüssen mit einer der Leitungen verbunden;

b) ein in Reihe zu den Einzelableitern (6 bis 9) geschalteter gemeinsamer Ableiter (11) ist an einem von seinen zwei Elektrodenanschlüssen mit den jeweils anderen Elektrodenanschlüssen der Einzelableiter verbunden;

c) der andere Elektrodenanschluß des gemeinsamen Ableiters liegt auf einem Bezugspotential;

d) dem gemeinsamen Ableiter ist ein Kondensator parallelgeschaltet;

gekennzeichnet durch folgende Merkmale:

e) die Einzelableiter (6 bis 9) und der gemeinsame Ableiter (11) sind in einem metallischen Becher (12) angeordnet;

f) ein platten- oder becherförmiger Verbindungskörper (15) dient im Inneren des Bechers (12) als sämtlichen Ableitern (6 bis 9 und 11) gemeinsamer Elektrodenanschluß (10);

g) der Verbindungskörper (15) bildet mit dem Becher (12) den Kondensator.

2. Überspannungsableiter nach Anspruch 1, dadurch gekennzeichnet, daß die Ansprechspannungen der Einzelableiter (6 bis 9) jeweils kleiner sind als die Betriebsspannung der angeschlossenen Leitung.

3. Überspannungsableiter nach Anspruch 1 oder 2, dadurch gekennzeichnet, daß die Einzelableiter (6 bis 9) Gasentladungsableiter sind.

4. Überspannungsableiter nach den Ansprüchen 1 oder 2, dadurch gekennzeichnet, daß die Einzelableiter (6 bis 9) Festkörperableiter, insbesondere Varistoren sind.

5. Überspannungsableiter nach Anspruch 3, dadurch gekennzeichnet, daß die Einzelableiter (6 bis 9) bei Überlastung einen inneren Kurzschluß durch Verschmelzung der Elektrodenscheiben bekommen und der gemeinsame Ableiter (11) auf seiner Außenseite einen vorgespannten, über eine Schmelzpille (30) von der Außenseite abgespreizten Kurzschlußbügel (26) trägt, der bei Überlastung die Elektrodenanschlüsse kurzschließt.

**Claims**

1. A surge diverter for a plurality of electric lines which are to be commonly protected, having the features:

a) one of the two electrode terminals of a respective individual diverter (6 to 9) is connected to each of the lines;

b) one of the two electrode terminals of a common diverter (11), which is connected in series with the individual diverters (6 to 9), is connected to the other electrode terminals of the individual diverters;

c) the other electrode terminal of the common diverter is connected to a reference potential;

d) a capacitor is connected in parallel with the common diverter;

characterised by the following features:

e) the individual diverters (6 to 9) and the common diverter (11) are housed in a metal cup (12);

f) within the cup (12), a plate-shaped or cup-shaped connecting body (15) serves as an electrode terminal (10) which is common to all the diverters (6 to 9 and 11);

g) the connecting body (15), together with the cup (12), forms the capacitor.

2. A surge diverter according to Claim 1, characterised in that the response voltages of the individual diverters (6 to 9) are in each case less than the operating voltage of the connected line.

3. A surge diverter according to Claim 1 or Claim 2, characterised in that the individual diverters (6 to 9) are gas-discharge diverters.

4. A surge diverter according to Claim 1 or Claim 2, characterised in that the individual diverters (6 to 9) are solid-state diverters, in particular varistors.

5. A surge diverter according to Claim 3, characterised in that in the event of overload, the individual diverters (6 to 9) are internally short-circuited by fusion of the electrode plates and at its outer side, the common diverter (11) carries a prestressed short-circuiting clip (26) which is propped away from the outer side by means of a fusible pellet (30) and which short-circuits when the electrode terminals are overloaded.

**Revendications**

1. Dérivateur de surtension pour protéger simultanément plusieurs conducteurs, présentant les particularités suivantes:

a) chaque dérivateur individuel (6 à 9) est relié, par une de ses bornes de raccordement des électrodes, à l'un des conducteurs;

b) un dérivateur commun (11), monté en série avec les dérivateurs individuels (6 à 9), est relié par l'une de ses bornes de raccordement des électrodes, respectivement avec les autres bornes de raccordement des électrodes des dérivateurs individuels;

c) l'autre électrode de raccordement des électrodes des dérivateurs communs est portée à un potentiel de référence;

d) en parallèle sur le dérivateur commun est monté un condensateur;

caractérisé par les particularités suivantes:

e) les dérivateurs individuels (6 à 9) et le dérivateur commun (11) sont disposés dans un godet métallique (12);

f) un corps de liaison (15), ayant la forme d'une plaque ou d'un godet, sert, à l'intérieur du godet (12), de borne de raccordement d'électrode (10) qui est commune à tous les dérivateurs (6 à 9 et 11);

g) le corps de liaison (15) forme, avec le godet (12), le condensateur.

2. Dérivateur de surtension selon la revendication 1, caractérisé par le fait que les tensions de réponse des dérivateurs individuels (6 à 9) sont respectivement inférieures à la tension de fonctionnement des lignes branchées.

3. Dérivateur de surtension selon la revendication 1 ou 2, caractérisé par le fait que les dérivateurs individuels (6 à 9) sont des dérivateurs à décharge dans un gaz.

4. Dérivateur de surtension selon les revendications 1 ou 2, caractérisé par le fait que les dérivateurs individuels (6 à 9) sont des dérivateurs à l'état solide, en particulier des varistors.

5. Dérivateur de surtension selon la revendication 3, caractérisé par le fait que les dérivateurs individuels (6 à 9) reçoivent, en cas de surcharge, un court-circuit intérieur par fusion des disques d'électrodes, et le dérivateur commun (11) porte, sur son côté extérieur, un étrier de court-circuit, à tension préalable, expansé du côté extérieur par une pastille de fusion, et qui en cas de surcharge, court-circuite les bornes de raccordement des électrodes.

# FIG 1

# FIG 2

# FIG 3